# EUROPEAN PATENT SPECIFICATION

(11) **EP 3 460 956 B1**
(45) Date of publication and mention of the grant of the patent: **01.07.2020**
(21) Application number: 18204204.4
(22) Date of filing: 31.05.2013
(51) Int. Cl.: H02K 1/27, H02K 1/28, H02K 1/02

(54) **ROTOR**
ROTOR
ROTOR

(30) Priority: 01.06.2012 GB 201209833
(43) Date of publication of application: 27.03.2019
(62) Divisional of application: 13726848.8
(73) Proprietor: Crompton Technology Group Ltd., Banbury, Oxfordshire OX16 4SU (GB)
(72) Inventor: GIDDINGS, Peter Francis, Swindon, Wiltshire SN6 7NU (GB); HENRY, Nicholas John, Northants, Northamptonshire NN1 3RR (GB); DRAKELEY, Jon, Leamington Spa, Warwickshire CV31 2TH (GB)
(74) Representative: Dehns

(56) References cited:
- CN-U- 201 994 746
- DE-A1- 19 726 341
- JP-A- H0 919 093

## Description

This invention relates to a rotor for an electromechanical device.

Electromechanical devices, such as motors, generators and actuators, include rotating elements or rotors which may include magnets. In high speed applications, it is known to hold rare earth element magnets onto a metallic material hub element (such as steel or titanium) using a carbon fibre composite retention sleeve that is disposed over the magnets. A further shaft element may be coupled to the hub to transmit torque from or to the electromechanical device. The high tensile strength and stiffness of a carbon fibre composite magnet retention sleeve allows such an arrangement to retain magnets even during high rotational velocity operation without failure. Furthermore, the low density of carbon fibre minimises the weight penalty of the magnet retention sleeve.

Carbon fibre retention sleeves have been applied by directly wrapping carbon fibre composites onto metal rotor components, or by pressing preformed carbon fibre composites over metal rotors in a secondary operation.

Due to the high magnetic field present in such electromechanical devices, the rotation of the rotor results in eddy currents in the metal hub, resulting in mechanical losses and reduced efficiency. The isotropic nature of the metal materials of the hub limits design freedom in optimising its structure for minimum weight and inertia. Likewise, the use of carbon fibres in the retention sleeve surrounding the magnets can result in similar losses. The presence of the retention sleeve further results in the spacing of the magnets from the associated stator being increased which is undesirable.

The applicant has thus identified that this arrangement of a metal hub element with a rare earth magnet and a carbon fibre composite retaining sleeve may be substantially improved. It is an object of the invention to provide a rotor in which at least some of the disadvantages associated with known arrangements are overcome or are of reduced effect.

DE 19726341 discloses a motor-driven spindle having a shaft made of a fibre reinforced plastics material. Magnets are carried by the shaft and surrounded by the fibre reinforced plastics material of the shaft, such that the magnets are embedded within the material of the shaft.

According to a first aspect of the invention disclosed in independent claim 1 there is provided a rotor comprising a magnet, a magnet retaining element located, at least in part, radially outward of the magnet relative to a rotor axis, and a rotor shaft, wherein the rotor shaft and the magnet retaining element are of fibre reinforced composite material and are formed integrally with one another, characterised in that the orientation of the fibres of the magnet retaining element differs from the orientation of the fibres of the rotor shaft.

The provision of a composite rotor in this manner allows strength and stiffness of the rotor to be maintained whilst allowing weight reductions to be made.

Preferably, the magnet retaining element comprises non-conductive, non-magnetic fibres in areas of high magnetic flux density, and carbon fibres in areas of low magnetic flux density.

In any of the arrangements set out hereinbefore, the magnet may comprise a magnetically loaded fibre reinforced composite. The loading may be achieved using magnetic material particles, foils of magnetic materials, or by any other suitable technique.

The invention will further be described, by way of example, with reference to the accompanying drawings, in which:
Figure 1 is an exploded diagram of a known rotor;
Figure 2 is a perspective view, partly in section, illustrating an exemplary rotor;
Figure 3 is a view of part of the rotor of Figure 2;
Figure 4 is a diagrammatic sectional view illustrating another exemplary rotor; and
Figure 5 is a view similar to Figure 2 illustrating a rotor in accordance with an embodiment of the invention.

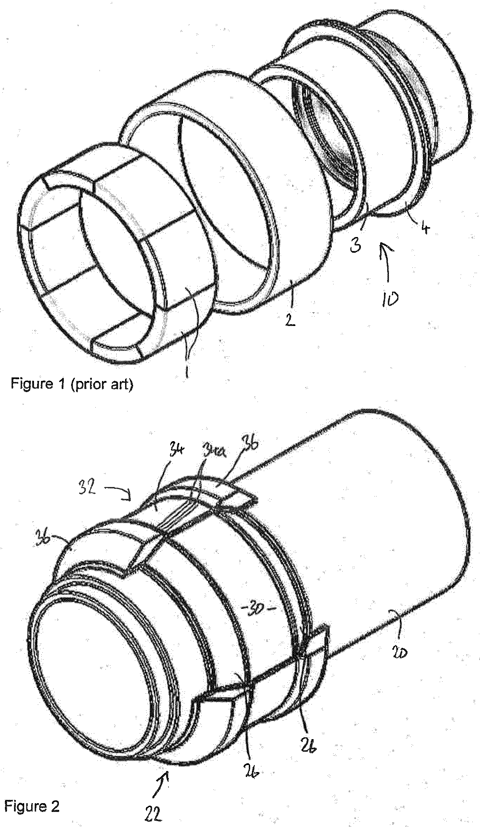

Referring first to Figure 1, a rotor 10 for an electromechanical device is shown. The rotor 10 comprises a metallic hub element 3 adapted to be secured to a rotor shaft (not shown), a plurality of separate magnets 1, and a carbon fibre composite sleeve element 2. In use, the magnets 1 are disposed on the outer surface of the hub element 3, adjacent to a retaining lip 4 thereof. The magnets 1 are secured against centripetal force arising from rotation of the rotor 10 by the sleeve element 2, which in use is secured over the magnets 1.

Due to their dissimilar materials, the hub element 3, magnets 1 and sleeve 2 are manufactured separately and subsequently assembled to form the completed rotor. In high speed applications, for example in aerospace applications, materials with high strength and stiffness are used. The metallic hub element 3 may, for instance, comprise steel or titanium. The high strength and low weight of the carbon fibre sleeve element 2 provides adequate strength and stiffness to retain the magnets 1 during high speed operation with minimal penalties in mass and rotational inertia. The element 2 may be prefabricated and positioned over the magnets 1 during the assembly process. Alternatively, it may be formed in position by the wet winding of carbon fibres over the magnets 1 and subsequent curing, or allowing to cure, of the resin provided upon the fibres. In such an arrangement, it will be appreciated that the fibres are wound around the circumference of the assembly comprising the hub 3 and the magnets 1.

High magnetic field strengths are typically used in electromechanical devices. For example in an electrical motor a magnetic field produced by windings is used to drive rotation of the rotor. The high conductivity of the metal hub 3 in combination with the magnetic field means that such rotation induces eddy currents in the hub 3 which result in losses that reduce device efficiency. Since carbon fibres are electrically conductive, eddy currents may similarly be induced in the material of the sleeve 2, further decreasing drive efficiency.

Furthermore, the optimisation of the hub structure for low mass, low inertia and torsional and axial stiffness is compromised by the isotropic mechanical properties and relatively high density of metal materials. This leads to a heavier and higher inertia designs than can be obtained according to embodiment of the present invention.

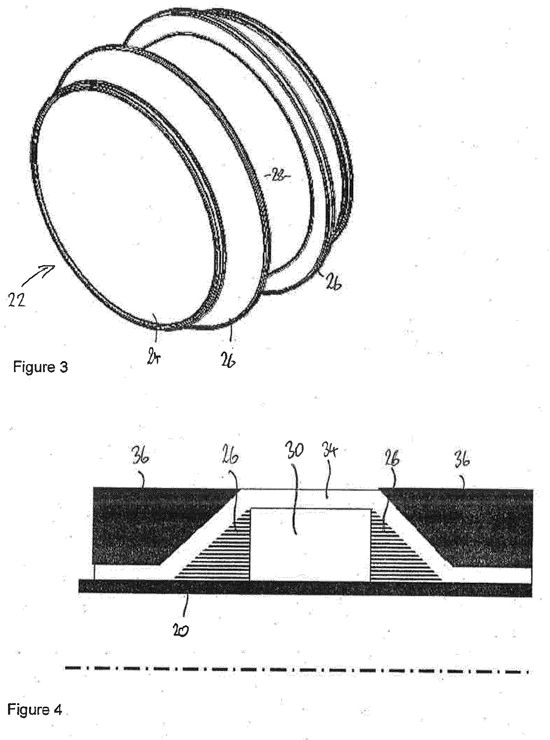

Referring next to Figure 2, another exemplary rotor is illustrated. The rotor shown in Figure 2 comprises a rotor shaft 20 upon which is mounted a hub component 22 (see Figure 3). The rotor shaft 20 may, for example, be of metallic construction, but this need not always be the case and arrangements in which the shaft 20 is of, for example, composite construction are possible. Indeed the use of composite materials may be thought to be advantageous as they may allow weight savings to be made whilst maintaining a shaft of good strength and stiffness.

The hub component 22 comprises an inner sleeve 24 which bears against the outer surface of the shaft 20, in use. Integrally formed with the inner sleeve 24 are a pair of shoulders 26. The shoulders 26 are spaced apart from one another and define therebetween a channel 28 within which magnets 30 are located. In this example, the magnets 30 are of the rare-earth form, but other magnets could be used.

The magnets 30 are secured in position by a magnet retaining element 32 which serves to resist outward movement of the magnets 30, in use. The magnet retaining element 32 comprises a sleeve section 34 which extends over the magnets 30. The sleeve section 34 comprises a fibre reinforced composite material, the fibres 34a of which extend lengthwise of the rotor shaft 20. Conveniently, the fibres 34a of the sleeve section are wound onto the hub component 22, after positioning of the magnets 30 onto the hub component 22. In order to wind the fibres 34a onto the hub component 22, they must be angled to the axis of the hub component 22 and shaft 20, but the angle therebetween is preferably small. By way of example, it is conveniently less than 25°. However, other angles may be used without departing from the scope of the invention.

The shoulders 26 serve to axially locate the magnets 30 during the assembly process. In addition, as shown, the shoulders 26 are of ramped form and serve to reduce the angle through which the fibres 34a must bend as they pass over the ends of the magnets 30.

The magnet retaining element 32 further comprises first and second anchoring ribs 36 located adjacent opposite axial ends of the magnets 30 and serving to anchor the fibres 34a of the sleeve section 34. Each rib 36 is of fibre reinforced composite form, the fibres of which are circumferentially wound. It will be appreciated that once the resin of the composite material or materials forming the magnet retaining element 32 have cured, the sleeve section 34 and ribs 36 will be integral with one another, and the ribs 36 will serve to anchor the fibres 34a of the sleeve section in position. The fibres 34a of the sleeve section 34 will act, in use, in a manner similar to a beam, anchoring the magnets 30 in position against the forces urging the magnets 30 to move radially, in use.

Conveniently, the fibres 34a are of glass fibre or other non-conductive material form. As a result, the formation of eddy currents and associated losses therein are reduced. The fibres forming the ribs 36 are conveniently of carbon form. The use of carbon fibres in the ribs 36 is advantageous in that, compared to glass fibres, carbon fibres are of enhanced strength.

The substantially axially extending fibres 34a are also thought to be beneficial as they will efficiently transfer torque between the magnets 30 and the remainder of the rotor. It is thought that in traditional arrangements, slight radial movement of the magnets can result in the transmission of torque between the magnets and the remainder of the rotor being impaired.

Whilst conventional rare earth magnets are mentioned hereinbefore, it will be appreciated that the magnets could take a range of other forms. By way of example, if desired the magnets could be of composite form, comprising reinforcing fibres and a resin material doped with particles or foils of a suitable magnetic material. With such arrangements, after curing of the resin, the particles or foils are suitably magnetised to form the required poles. Magnets of this type are well known and so will not be described herein in further detail.

In the arrangement described hereinbefore, the hub component 22 is mounted upon and secured to a suitable rotor shaft 20. It will be appreciated, however, that depending upon the material of the rotor shaft 20, the rotor shaft and hub component 22 may be formed integrally with one another. A further alternative is shown in Figure 4 in which the shoulders 26 are formed directly upon the rotor shaft 20, the inner sleeve 24 of the hub component 22 being formed by the rotor shaft 20. In this arrangement, the shoulders 26 may be of any suitable material, for example suitable polymer foam could be used.

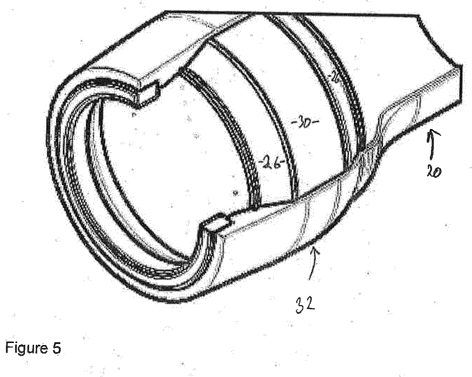

An embodiment of the invention, as shown in Figure 5, comprises a rotor shaft 20 integrally formed with the magnet retaining element 32 to form a composite rotor. In this arrangement, as with the arrangements described hereinbefore, the magnet retaining element 32 conveniently incorporates fibres which extend in the lengthwise direction of the rotor and which serve to retain the magnets 30 against outward radial movement. These fibres may be of glass form. However, other arrangements are possible. For example, the magnet retaining element 32 may include just circumferentially wound fibres, not ones extending in the lengthwise direction. The ribs 36 of this arrangement may be incorporated into and form part of the shaft 20. As illustrated, the shaft 20 may incorporate features supporting bearings or the like.

Whilst several specific embodiments of the invention have been described hereinbefore, it will be appreciated that a wide range of modifications and alterations may be made thereto without departing from the scope of the invention.

## Claims

1. A rotor comprising a magnet (30), a magnet retaining element (32) located, at least in part, radially outward of the magnet (30) relative to a rotor axis, and a rotor shaft (20), wherein the rotor shaft (20) and the magnet retaining element (32) are of fibre reinforced composite material and are formed integrally with one another,
**characterised in that** the orientation of the fibres of the magnet retaining element (32) differs from the orientation of the fibres of the rotor shaft (20).

2. A rotor according to Claim 1, wherein the magnet retaining element (32) comprises non-conductive, non-magnetic fibres in areas of high magnetic flux density, and carbon fibres in areas of low magnetic flux density.

3. A rotor according to any of the preceding claims, wherein magnet (30) comprises a magnetically loaded fibre reinforced composite.

## Patentansprüche

1. Rotor, umfassend einen Magneten (30), ein Magnetrückhalteelement (32), das sich zumindest teilweise radial außerhalb des Magneten (30) relativ zu einer Rotorachse befindet, und eine Rotorwelle (20), wobei die Rotorwelle (20) und das Magnetrückhalteelement (32) aus faserverstärktem Verbundmaterial sind und einstückig miteinander gebildet sind,
**dadurch gekennzeichnet, dass** sich die Ausrichtung der Fasern des Magnetrückhalteelements (32) von der Ausrichtung der Fasern der Rotorwelle (20) unterscheidet.

2. Rotor nach Anspruch 1, wobei das Magnetrückhalteelement (32) nichtleitende, nichtmagnetische Fasern in Bereichen mit hoher magnetischer Flussdichte und Kohlefasern in Bereichen mit geringer magnetischer Flussdichte umfasst.

3. Rotor nach einem der vorhergehenden Ansprüche, wobei Magnet (30) einen magnetisch geladenen faserverstärkten Verbundstoff umfasst.

## Revendications

1. Rotor comprenant un aimant (30), un élément de retenue d'aimant (32) situé, au moins en partie, radialement à l'extérieur de l'aimant (30) par rapport à un axe de rotor, et un arbre de rotor (20), dans lequel l'arbre de rotor (20) et l'élément de retenue d'aimant (32) sont en matériau composite renforcé par des fibres et sont formés d'un seul tenant l'un avec l'autre,
**caractérisé en ce que** l'orientation des fibres de l'élément de retenue d'aimant (32) diffère de l'orientation des fibres de l'arbre de rotor (20).

2. Rotor selon la revendication 1, dans lequel l'élément de retenue d'aimant (32) comprend des fibres non magnétiques non conductrices dans des zones de densité de flux magnétique élevée, et des fibres de carbone dans des zones de densité de flux magnétique faible.

3. Rotor selon l'une quelconque des revendications précédentes, dans lequel aimant (30) comprend un composite renforcé par des fibres chargé magnétiquement.
